# EUROPEAN PATENT APPLICATION

(11) **EP 4 607 033 A1**
(43) Date of publication of application: **27.08.2025**
(21) Application number: 24159666.7
(22) Date of filing: 26.02.2024
(51) Int. Cl.: F04D 15/02, A01G 25/16

(54) **A PUMP**

(71) Applicant: Husqvarna AB, 561 82 Huskvarna (SE)
(72) Inventor: Klotz, Boris, 89075 Ulm (DE)
(74) Representative: Finkele, Rolf

(57) **Abstract**

A pump **(100)** comprises a water inlet **(102)** to receive water from a water source, and a motor **(108)** selectively operated by a controller **(124)** that drives a pump assembly to pressurize received water. The pump **(100)** further comprises a water outlet **(104)** up-stream of the pumping assembly and at least a first channel **(114)** and a second channel **(116)** into which the pressurized water via the water outlet **(104)** is directed. Further, a pressure sensor **(126)** is part of the controller **(124)** of the pump **(100)** for measuring a water pressure at the water outlet **(104)** such that the motor **(108)** of the pump **(100)** is switched off or switched on if the water pressure exceeds a pre-defined threshold value or is below the pre-defined threshold value respectively at the water outlet **(104).** The pump **(100)** is characterized in that an irrigation schedule governs the controller **(124)** to via wire **(128, 128')** or wirelessly send at least one control signal that allows the opening and closing of a valve **(118).**

## Description

### TECHNICAL FIELD

The present disclosure relates to a pump, and more particularly to an automatic water pump.

### BACKGROUND

An automatic water pump may be the automatic home and garden pump with a water inlet and a water outlet to supply water received from a water source for various home and garden applications. The water outlet may have two channels such that one of the channels may be used to supply water for various garden applications, and the other channel may be used to supply water for various domestic applications. The automatic water pump may further include a pressure sensor for measuring the water pressure at the water outlet.

The automatic water pump may be driven alternatively in two different working modes. In a first mode, the water may be supplied for various home applications, such as toilet flushing, washing clothes in a washing machine, and the like. A valve may be disposed downstream of the channel designated to supply water for various domestic applications such that if the valve is closed, the automatic water pump may switch off when the water pressure exceeds a pre-defined threshold value. Similarly, when the valve is opened, the automatic water pump may switch on when the water pressure falls below the pre-defined threshold value.

Further, in a second mode, the automatic water pump may be in a scheduled mode such that the working of the automatic water pump may be governed by a schedule, particularly an irrigation schedule and the automatic water pump may function only during a scheduled duration and supply water from the channel designated for various garden applications only during the scheduled duration. In other words, the pump may remain switched off outside the scheduled duration without giving any due importance to the changes in the water pressure.

However, the existing automatic water pump may not be able to be driven simultaneously in two different working modes as per requirements despite having two separate designated modes for various home and garden applications. In other words, outside the scheduled duration decided in the scheduled mode, the automatic water pump may not function to cater to various home applications discussed above.

### SUMMARY OF THE INVENTION

In view of the above, it is an objective of the present invention to solve or at least reduce the drawbacks discussed above. The objective is at least partially achieved by a pump.

According to an aspect of the present invention, the pump comprises a water inlet to receive water from a water source and a motor driving a pump assembly to pressurize received water such that a controller controls the motor by switching it on and off. The pump further comprises a water outlet up-stream of the pumping assembly and at least a first channel and a second channel into which the pressurized water via the water outlet is directed. Further, a pressure sensor is part of the controller of the pump for measuring a water pressure at the water outlet such that the motor of the pump is switched off if the water pressure exceeds a pre-defined threshold value at the water outlet; and the motor of the pump is switched on if the water pressure is below the pre-defined threshold value at the water outlet. The pump is characterized in that an irrigation schedule governs the controller to via wire or wirelessly send at least one control signal that allows the opening and closing of a valve.

The present disclosure provides an improved pump that may be able to provide water for domestic applications during any time of the day as per the requirement of a user as well as provide water for irrigation purposes during the scheduled hours of irrigation as preferred or pre-set by the user. In other words, the pump may be efficient enough to be able to simultaneously operate in different modes of operation of the pump. The pump may be advantageously able to supply water for domestic applications even outside the scheduled duration of the irrigation. The pump may be active throughout the day based on the pressure sensor readings taken at the water outlet, i.e., the pump may start working as soon as the pressure sensor may report a dip in the value of the water pressure compared to the threshold value of the water pressure at the water outlet and conversely the pump may stop working as soon as the pressure sensor may report an increase in the water pressure compared to the threshold value of the water pressure at the water outlet.

The water inlet and the water outlet according to the present invention may denote the portions of the pump from which the water may enter and leave the pump respectively.

The threshold value according to the present invention may denote a predetermined value of water pressure above which the pump may stop working and below which the pump may start working. There might be two different threshold values with one that causes the pump to switch OFF and the other one (smaller in iot pressure value) that causes the pump to switch ON; meaning there is a certain hysteresis in the ON/OFF cycle of the pump.

The irrigation schedule according to the present invention may denote the duration of the day for which the pump may supply water for irrigation purposes. For example, the irrigation schedule is set to be 1p.m. to 2 p.m., thereby the pump may supply water for irrigation purposes only during this time of the day.

According to an exemplary embodiment of the invention, the second channel of the pump houses the valve such that when the irrigation schedule via the controller governs the valve to be in a closed state, the pump does not supply water passing through the valve irrespective of the water pressure at the water outlet, and when the irrigation schedule via the controller governs the valve to be in an open state, the pump supplies water passing through the valve. The pump may advantageously mount the valve in the second channel that supplies water for irrigation. Thus, only when the valve is in the open state irrigation takes place and if the valve is in the closed state there is no irrigation. In other words, the pump may operate based on the readings of the pressure sensor but may supply water for irrigation only during the scheduled duration when the valve is in the open state, as the valve being in the closed state will block any pressure change caused by an irrigation device from being recognized by the pump's pressure sensor.

According to an exemplary embodiment of the invention, the pump houses an electrical interface that allows to via wire or wirelessly connect a signal line of valve thereto, that allows to signal to the valve to open or close. If the user may install or mount the valve outside of the pump and/ or the second channel of the pump, and within a further channel that may be additionally fluidly coupled to the second channel of the pump, and disposed outside of the pump, then the electrical interface housed in the pump may allow to via wire or wirelessly connect the signal line of the valve thereto, that may allow to signal to the valve to open or close. In other words, the electrical interface may communicatively connect the valve with the controller of the pump, when the valve is disposed outside of the pump. Further, the electrical interface may also be used when the pump houses the valve within the pump, and further there is additional valve disposed outside the pump such that the user may selectively switch between the valves as per the user requirements and preferences.

According to an exemplary embodiment of the invention, the irrigation schedule is stored in a memory being part of the controller of the pump. The irrigation schedule may advantageously be stored within the controller of the pump such that the irrigation schedule may be override or changed easily by the user standing next to the pump as per requirement based on multiple factors, such as, but not limiting to weather, or climate change.

According to an exemplary embodiment of the invention, the irrigation schedule is stored in a remote device, and is transferred via wire or wirelessly to the controller of the pump. The irrigation schedule may be override or changed easily by the user physically present in the remote location relative to the pump. For example, the remote device may be a smartphone wirelessly connected to the controller and the user may update the irrigation schedule using the smartphone anytime and from any location, not necessarily close to the pump.

According to an exemplary embodiment of the invention, the at least one channel provides water for domestic applications. The at least one channel may provide water for washroom, laundry, cooking, and other domestic applications. The at least one channel designated for domestic applications may be covered with a cover during the non-use of the channel. Further, the at least one channel designated for domestic applications may be provided with a tap, such that the outflow of the water via the channel may be manually controlled by the consumer.

According to an exemplary embodiment of the invention, a user interface is provided with the pump for inputting control commands. The user interface may be provided to control or update the operating parameters of the pump, such as a flow rate, amongst others, which may be immediately updated as per the user preference. The user interface may also be used to override or update the controller settings, and/ or the irrigation schedule.

According to an exemplary embodiment of the invention, the user interface is coupled to the remote device in the wired or wireless manner. The remote device may be communicably coupled with the user interface in the wired or wireless manner, for example, using a power cable, or Bluetooth technology, or LAN, or IOT, and other known wired or wireless technologies. The user may be able to input commands in the user interface without having to be physically present near the pump.

According to an exemplary embodiment of the invention, the at least one first channel is covered with a cover during the non-use of the channel. The at least one filter channel may be covered to prevent contamination of the water in the pump and/ or the at least one channel, and further to prevent the pump assembly from any inadvertent damage.

Before discussing the invention with the help of the drawings the invention will be briefly discussed in general. A pump may be designed to have an integrated irrigation control function controllable by a user interface directly at the pump or via a mobile device. The pump may have a separate operation mode such that the irrigation may not be done by ON/OFF cycles of the pump but via a valve. The pump may further include an algorithm in a software that may ensure both the conventional ON/OFF and the valve operation mode.

The pump according to the present invention may have an outlet with two channels that may be treated and controlled separately by a controller and not using any external and expensive water control units. The pump according to the present invention may allow one channel to be used for scheduled garden irrigation and the other channel to be used for automatic domestic water supply at the same time.

According to an exemplary embodiment of the invention, the pump may contain an automatic switch, an integrated scheduling function with local or mobile user interface. The scheduling function may have the ON/OFF functionality and additionally have the valve control function that may be easily selected by a user. According to an exemplary embodiment of the invention, the pump may have an integrated valve, or an external valve connected by wired or wireless connection methods.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a side cross-sectional view of a pump, in accordance with an exemplary embodiment of the present disclosure;
**FIG. 2** illustrates another side cross-sectional view of a pump, in accordance with an exemplary embodiment of the present disclosure, and
**FIG. 3** illustrates a schematic block diagram of an exemplary, non-limiting embodiment for a controller, in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

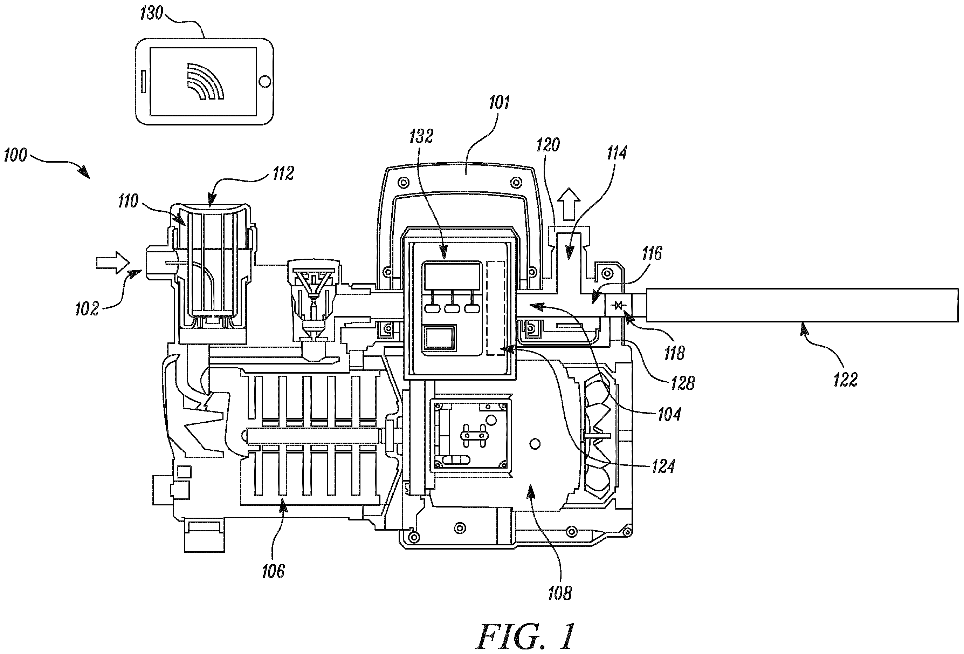

**FIG. 1** illustrates a side cross-sectional view of a pump **100.** The pump **100** is portable and includes a handle **101** to lift and carry the pump **100.** The pump **100** includes an impeller **106** and a motor **108** such that the motor **108** is configured to rotate the impeller **106.** When the impeller **106** rotates, a suction force is created that promotes ingress of water into the pump **100** via a water inlet **102.** In other words, the pump **100** includes the water inlet **102** to receive water from a water source (not shown). Further, the water that enters the pump **100** via the water inlet **102** firstly passes through a filter **110.** The filter **110** is disposed proximate the water inlet **102** of the pump **100.** The filter **110** is disposed downstream of the water inlet **102** in the direction of the flow of water received from the water source. Further, an opening **112** is disposed proximate the water inlet **102** of the pump **100** for allowing priming of the pump **100.** The opening **112** is covered with a cap (not shown) during operation of the pump **100.** The opening **112** is substantially perpendicular to the water inlet **102** of the pump **100.** Further, the opening **112** is disposed upstream of the filter **110** in a direction opposite to the direction of flow of water in the pump **100.**

Further, the motor **108** of the pump **100** drives a pump assembly to pressurize that water received from the water source and further via the water inlet **102** and direct the pressurized water towards a water outlet **104.** In other words, the pump **100** includes the water outlet **104** up-stream of the pumping assembly of the pump **100** and at least a first channel **114** and a second channel **116** into which the pressurized water via the water outlet **104** is directed for further applications.

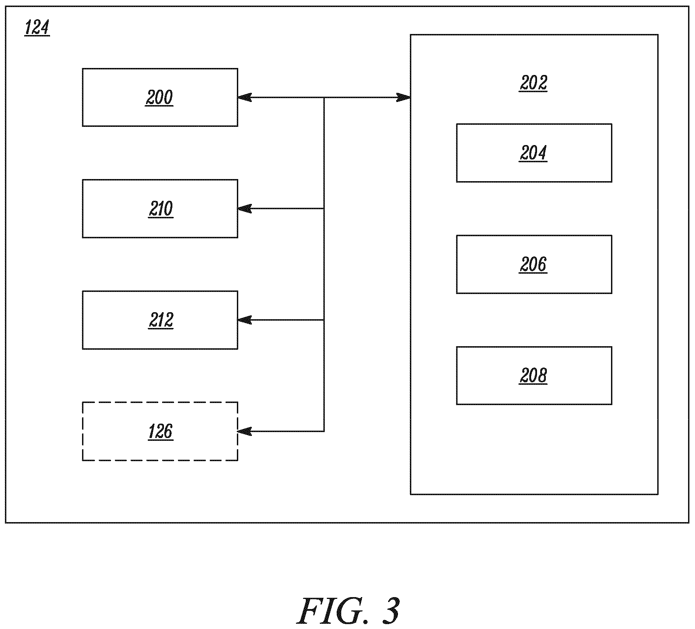

With continuous reference to **FIG. 1****,** the pump **100** includes a controller **124** configured to control the motor **108** by switching it on and off. Further, a pressure sensor **126** (shown in **FIG. 3****)** is part of the controller **124** of the pump **100** for measuring a water pressure at the water outlet **104** such that the motor **108** of the pump **100** is switched off if the water pressure exceeds a pre-defined threshold value at the water outlet **104,** and the motor **108** of the pump **100** is switched on if the water pressure is below the pre-defined threshold value at the water outlet **104.** In other words, the pressure sensor **126** is configured for measuring the water pressure at the water outlet **104** and controlling the ON/OFF cycle of the pump **100.** The pressure sensor **126** is communicably coupled to the controller **124** of the pump **100** such that the controller **124** is configured to control the operation of the pump **100.** The pressure sensor **126** sends the water pressure readings at the water outlet **104** to the controller **124** in a wired or wireless manner such that the controller **124** enables the pump **100** to be switched off if the water pressure exceeds a pre-defined threshold value at the water outlet **104** and enables the pump **100** to be switched on if the water pressure is below the pre-defined threshold value at the water outlet **104.**

With continuous reference to **FIG. 1****,** the water outlet **104** of the pump **100** extends to the at least two channels **114, 116,** i.e., the at least one first channel **114** and the at least one second channel **116.** In the illustrated embodiment, the at least one first channel **114** is one first channel **114** and the at least one second channel **116** is one second channel **116.** The first channel **114** is substantially perpendicular to the water inlet **102** and the second channel **116** is substantially parallel to the water inlet **102.** Further, the first channel **114** is substantially perpendicular to the second channel **116.** Further, the at least one channel **114, 116** provides water for domestic applications and the at least one of the channels **114, 116** houses a valve **118,** particularly an irrigation valve. In the illustrated embodiment, the first channel **114** provides water for domestic applications and the first channel **114** is covered with a cover **120** during the non-use of the channel **114.** Further, the second channel **116** provides water for irrigation purposes and houses the valve **118.** The second channel **116** is removably and fluidly coupled to a further channel **122** disposed downstream of the second channel **116** such that the pressurized water received from the water outlet **104** is transported to the further channel **122** via the second channel **116** such that it is used for irrigation purposes.

Further, the working of the valve **118** housed in the second channel **116** is governed by an irrigation schedule. In other words, the irrigation schedule governs the controller **124** to via wire **128** or wirelessly send at least one control signal that allows the opening and closing of the valve **118.** In other words, when the irrigation schedule via the controller **124** governs the valve **118** to be in a closed state, the pump **100** does not supply water passing through the valve **118** irrespective of the water pressure at the water outlet **104.** Further, when the irrigation schedule via the controller **124** governs the valve **118** to be in an open state, the pump **100** supplies water passing through the valve **118.**

For example, if the irrigation schedule is set between **1** p.m. and **2** p.m., the valve **118** is in the open state only between **1** p.m. and **2** p.m. and the valve **118** remains in the closed state outside the scheduled duration. Thus, if a user of the pump **100** wishes to withdraw water for domestic applications outside the scheduled duration, the pump **100** supplies water only to the first channel **114** due to drop in the threshold value of the water pressure at the water outlet **104** upon opening the cover **120** and the pump **100** does not supplies water to the second channel **116** as the valve **118** is governed to be in the closed state outside the scheduled duration. Similarly, if the user wishes to withdraw water for domestic applications within the scheduled duration, the pump **100** supplies water to the first channel **114** due to drop in the threshold value of the water pressure at the water outlet **104** upon opening the cover **120** and further the pump **100** also supplies water to the second channel **116** due to drop in the threshold value of the water pressure at the water outlet **104** combined with the opening of the valve **118** within the scheduled duration.

Further, the irrigation schedule is stored in the pump **100,** and the pump **100** is electrically connected to the valve **118** in a wired or wireless manner. **FIG. 1** illustrates the pump **100** to be electrically connected to the valve **118** in the wired manner using the wire **128.** In other words, the irrigation schedule is stored in the controller **124** that is embedded in a user interface **132** of the pump **100** and that also additionally controls the flow of water through the pump **100** based on the water pressure inputs received from the pressure sensor **126.** In other words, the controller **124** operates the pump **100** based on the readings of the water pressure at the water outlet **104** and also selectively allows the water supply via the second channel **116** by controlling the valve **118** based on the irrigation schedule. Further, the pump **100** includes the controller **124** and the controller **124** is electrically connected to the valve **118** using the wire **128.**

In another embodiment, the irrigation schedule is stored in the remote device **130** and the remote device **130** is electrically connected to controller **124** of the pump **100** in a wired or wireless manner. In other words, the irrigation schedule is stored in the remote device **130** and is transferred via wire or wirelessly to the controller **124** of the pump **100** such that the controller **124** controls the state of the valve **118** based on the irrigation schedule by communicating with the valve **118** in the wired or wireless manner.

With continuous reference to **FIG. 1****,** the user interface **132** is provided with the pump **100** for allowing inputting of control commands for operation of the pump **100.** For example, the user inputs the irrigation schedule which gets updated in the controller **124,** or the user inputs the flow rate of the pump **100** in the user interface **132** such that the controller **124** is instructed to maintain the desired flowrate of the pump **100.** The user interface **132** is coupled to a remote device **130** in the wired or wireless manner. As illustrated in **FIG. 1****,** the user interface **132** is electrically coupled to the remote device **130** in the wireless manner. The remote device **130** is configured to input control commands in the user interface **132** from a far-off or remote place from the location of the pump **100.**

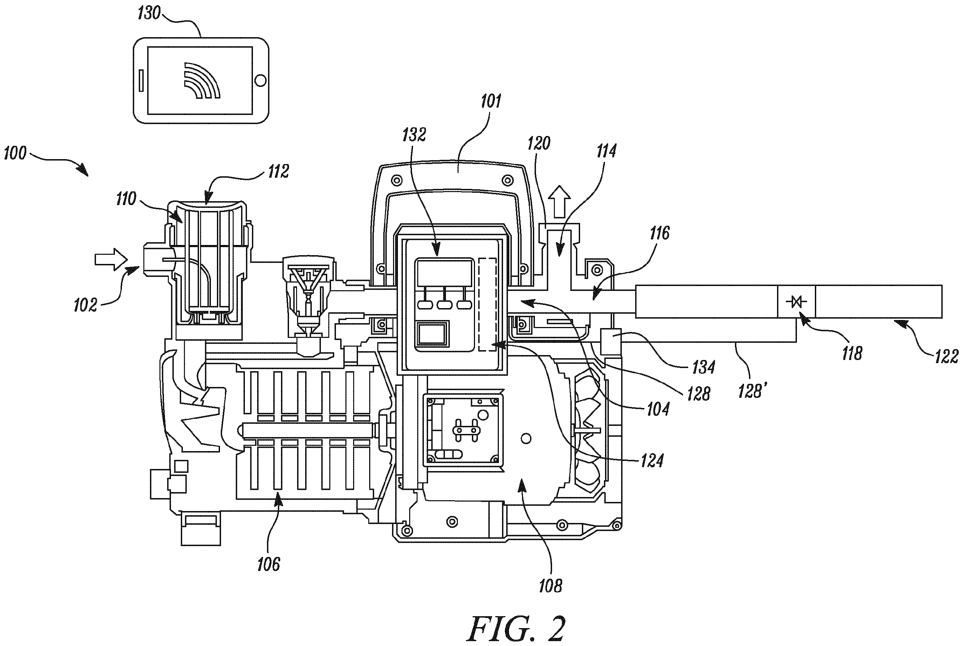

**FIG. 2** illustrates another side cross-sectional view of the pump **100** according to another exemplary embodiment of the present invention. The valve **118** is housed in the further channel **122** removably coupled with the second channel **116** in the downstream direction relative to the second channel **116** and external to the pump **100.** Further, in this embodiment, the pump **100** houses an electrical interface **134** that allows to via wire **128'** or wirelessly connect a signal line of valve **118** thereto, that allows to signal to the valve **118** to open or close. In other words, the controller **124** is electrically connected to the valve **118** using the wire **128'** that connects with the wire **128** via the electrical interface **134.** In other words, the pump **100** is electrically connected to the valve **118** using the wire **128'** that connects with the wire **128** via the electrical interface **134.**

Further, when the irrigation schedule via the controller **124** governs the valve **118** to be in the closed state, the pump **100** does not supply water passing through the valve **118** irrespective of the water pressure at the water outlet **104.** Further, when the irrigation schedule via the controller **124** governs the valve **118** to be in the open state, the pump **100** supplies water passing through the valve **118.**

**FIG. 3** illustrates a schematic block diagram of an exemplary, non-limiting embodiment for the controller **124.** The controller **124** includes one or more processor(s) **200** configured to execute computer-executable instructions **204** such as the irrigation schedule. Such computer-executable instructions **204** are stored on one or more computer-readable media including non-transitory, computer-readable storage media such as memory **202.** In other words, the irrigation schedule is stored in the memory **202** being part of the controller **124** of the pump **100.** The memory **202** includes non-volatile storage to persistently store the instructions **204,** operational settings **206,** and/or operational data **208.** The controller **124** further includes a communication interface **210** for wired or wireless communications with the remote device **130.** Further, a component interface **212** is also provided to couple the controller **124** via wire or wirelessly with the pressure sensor **126,** and/ or the valve **118,** and/ or the user interface **132,** and/ or the electrical interface **134.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Pump
- **101**: Handle
- **102**: Water Inlet
- **104**: Water Outlet
- **106**: Impeller
- **108**: Motor
- **110**: Filter
- **112**: Opening
- **114**: First Channel
- **116**: Second Channel
- **118**: Valve
- **120**: Cover
- **122**: Further Channel
- **124**: Controller
- **126**: Pressure Sensor
- **128**: Wire
- **128'**: Wire
- **130**: Remote Device
- **132**: User Interface
- **134**: Electrical Interface
- **200**: Processor
- **202**: Memory
- **204**: Instruction
- **206**: Operational Settings
- **208**: Operational Data
- **210**: Communication Interface
- **212**: Component Interface

## Claims

1. A pump **(100)** comprising:
a water inlet **(102)** to receive water from a water source,
a motor **(108)** driving a pumping assembly to pressurize that water, with a controller **(124)** controlling that motor **(108)** by switching it on and off,
a water outlet **(104)** up-stream of the pumping assembly and at least a first channel **(114)** and a second channel **(116)** into which the pressurized water via the water outlet **(104)** is directed, further comprising:
a pressure sensor **(126)** being part of the controller **(124)** of the pump **(100)** for measuring a water pressure at the water outlet **(104);** wherein:
the motor **(108)** of the pump **(100)** is switched off if the water pressure exceeds a pre-defined threshold value at the water outlet **(104);** and
the motor **(108)** of the pump **(100)** is switched on if the water pressure is below the pre-defined threshold value at the water outlet **(104);**
**characterized in that:**
an irrigation schedule governs the controller **(124)** to via wire **(128, 128')** or wirelessly send at least one control signal that allows the opening and closing of a valve **(118).**

2. The pump **(100)** according to claim **1,** wherein the second channel **(116)** of the pump **(100)** houses the valve **(118),**
wherein when the irrigation schedule via the controller **(124)** governs the valve **(118)** to be in a closed state, the pump **(100)** does not supply water passing through the valve **(118)** irrespective of the water pressure at the water outlet **(104);**
and when the irrigation schedule via the controller **(124)** governs the valve **(118)** to be in an open state, the pump **(100)** supplies water passing through the valve **(118).**

3. The pump **(100)** according to claim **1,** wherein the pump **(100)** houses an electrical interface **(134)** that allows to via wire **(128')** or wirelessly connect a signal line of valve **(118)** thereto, that allows to signal the valve **(118)** to open or close.

4. The pump **(100)** according to any one of the preceding claims, wherein the irrigation schedule is stored in a memory being part of the controller **(124)** of the pump **(100).**

5. The pump **(100)** according to claims **1-3,** wherein the irrigation schedule is stored in a remote device **(130)** and is transferred via wire or wirelessly to the controller **(124)** of the pump **(100).**

6. The pump **(100)** according to any one of the preceding claims, wherein the at least one channel **(114, 116))** provides water for domestic applications.

7. The pump **(100)** according to any one of the preceding claims, wherein a user interface **(132)** is provided with the pump **(100)** for inputting control commands.

8. The pump **(100)** according to claim 7, wherein the user interface **(132)** is coupled to the remote device **(130)** in the wired or wireless manner.

9. The pump **(100)** according to any one of the preceding claims, wherein the at least one first channel **(114)** is covered with a cover **(120)** during the non-use of the channel **(114).**
